# EUROPEAN PATENT APPLICATION

(11) **EP 4 632 727 A1**
(43) Date of publication of application: **15.10.2025**
(21) Application number: 25163515.7
(22) Date of filing: 13.03.2025
(51) Int. Cl.: G09G 5/10, G09G 3/3233, G09G 5/02

(54) **DISPLAY APPARATUS AND METHOD OF DRIVING DISPLAY PANEL USING THE SAME**

(30) Priority: 09.04.2024 KR 20240047877
(71) Applicant: Samsung Display Co., Ltd., Yongin-si, Gyeonggi-do 17113 (KR)
(72) Inventor: YOO, Gi-Na, Yongin-si (KR)
(74) Representative: Marks & Clerk LLP

(57) **Abstract**

A display apparatus includes: a display panel including a pixel, a data driver configured to apply a data voltage based on a data signal to the pixel and a driving controller configured to receive input image data and output the data signal. The driving controller converts a luminance of the input image data (IMG) and a color coordinate of the input image data by using test data (TD) based on a test image and output the data signal (DATA) based on a converted input image data (CIMG).

## Description

### BACKGROUND

### 1. Field

Embodiments of the present invention relate to a display apparatus. More particularly, embodiments of the present invention relate to a display apparatus in which a display quality is improved.

### 2. Description of the Related Art

Generally, a display apparatus includes a display panel and a display panel driver. The display panel includes a plurality of gate lines, a plurality of data lines and a plurality of pixels. The display panel driver includes a gate driver providing a gate signal to the gate lines, a data driver providing a data voltage to the data lines and a driving controller controlling the gate driver and the data driver.

Generally, an afterimage may be visible according to a driving time and a deterioration of display panel.

### SUMMARY

Embodiments of the present invention provide a display apparatus which delays a time point at which an afterimage on the display panel is visible.

Embodiments of the present invention also provide a method of driving display panel using the display apparatus.

According to embodiments, a display apparatus includes: a display panel including a pixel, a data driver configured to apply a data voltage based on a data signal to the pixel and a driving controller configured to receive input image data and output the data signal. The driving controller converts a luminance of the input image data and a color coordinate of the input image data by using test data based on a test image and output the data signal based on a converted input image data.

In an embodiment, the test data may include luminance recognition test data and color sense recognition test data. The luminance recognition test data may have a value based on selected luminance which is selected from the test image. The color sense recognition test data may have a value based on selected color which is selected from the test image.

In an embodiment, when the test image include a first luminance and a second luminance higher than the first luminance and the selected luminance is the second luminance of the first luminance and the second luminance, a first converted luminance of the converted input image data may be lower than a luminance of the input image data.

In an embodiment, when the test image further include a third luminance higher than the second luminance and the selected luminance is the third luminance among the first luminance, the second luminance, and the third luminance, a second converted luminance of the converted input image data may be lower than the first converted luminance.

In an embodiment, when the selected luminance is a second luminance higher than a first luminance, a range of the data voltage may be decreased compared to a case that the selected luminance is the first luminance.

In an embodiment, the pixel may include a driving transistor configured to generate a driving current based on a first power voltage and the data voltage and a light emitting element including a first electrode for receiving the driving current and a second electrode for receiving a second power voltage. When the selected luminance is a second luminance higher than a first luminance, the second power voltage may be increased compared to a case that the selected luminance is the first luminance.

In an embodiment, when the selected color is a first color, a second color coordinate of a second color which is complementary color of the first color may be converted by the driving controller.

In an embodiment, when the selected color is the first color, the second color coordinate after conversion may be closer to a first color coordinate of the first color than the second color coordinate before the conversion.

In an embodiment, the driving controller may include a luminance data calculator configured to determine a luminance level based on the test data, a luminance compensator configured to determine a converted luminance of the converted input image data based on the luminance level and output offset data including information on the converted luminance and a signal outputter configured to convert the input image data based on the converted luminance and output the data signal.

In an embodiment, the display apparatus may further include a gamma reference voltage generator configured to apply a gamma reference voltage to the data driver. The signal outputter may further output a luminance control signal based on the converted luminance. The gamma reference voltage generator may change a range of the gamma reference voltage based on the luminance control signal.

In an embodiment, when the luminance level is higher, the range of the gamma reference voltage may be narrower.

In an embodiment, the display apparatus may further include a voltage generator configured to apply a first power voltage and a second power voltage to the display panel. The pixel may include a driving transistor configured to generate a driving current based on the first power voltage and the data voltage and a light emitting element including a first electrode for receiving the driving current and a second electrode for receiving the second power voltage. The signal outputter may further output a luminance control signal based on the converted luminance. The voltage generator may change the second power voltage based on the luminance control signal.

In an embodiment, when the luminance level is higher, the second power voltage may be higher.

In an embodiment, the driving controller may further include a color sense data calculator configured to determine a color sense level based on the test data and a color sense compensator configured to determine a converted color coordinate based on the color sense level. The signal outputter may convert the input image data based on the converted color coordinate and the converted luminance.

In an embodiment, a complementary color coordinate corresponding to the color sense level may be closer to corresponding color coordinate corresponding to the color sense level by the conversion of the input image data based on the converted color coordinate and the converted luminance.

In an embodiment, the driving controller may further include a stress converter configured to determine a deterioration of the display panel and output deterioration data and a compensation signal outputter configured to receive the deterioration data and the offset data and output a compensation signal based on the deterioration data and the offset data. The signal outputter may output the data signal based on the input image data and the compensation signal.

In an embodiment, the driving controller may include a color sense data calculator configured to determine a color sense level based on the test data, a color sense compensator configured to determine a converted color coordinate based on the color sense level and a signal outputter configured to convert the input image data based on the converted color coordinate and output the data signal.

In an embodiment, a complementary color coordinate corresponding to the color sense level may be closer to corresponding color coordinate corresponding to the color sense level by the conversion of the input image data based on the converted color coordinate.

In an embodiment, the test image may include a luminance test image. The luminance test image may include a first luminance image and a second luminance image. The first luminance image may include a first luminance region. The second luminance image may include a second luminance region having a luminance lower than a luminance of the first luminance region.

In an embodiment, the test image may include a color sense test image. The color sense test image may include a first color region having a first color and a second color region having a second color different from the first color.

In an embodiment, the test image may include a luminance test image. The luminance test image may include a first luminance region, a second luminance region having a luminance lower than a luminance of the first luminance region and a third luminance region having a luminance lower than a luminance of the second luminance region.

In an embodiment, the test image may include a first test image, a second test image and a third test image. The first test image may include a first color region having a first color and a second color region having a second color different from the first color. The second test image may include a first selected luminance region having a selected color which is selected from the first color and the second color. The third test image may have the selected color and includes a second selected luminance region having a luminance lower than a luminance of the first selected luminance region.

According to embodiments, a method of driving a display panel includes driving for displaying a test image, receiving test data based on the test image, calculating offset data based on the test data, converting input image data to converted input image data based on the offset data and generating a data signal based on the converted input image data.

In an embodiment, the test data may include luminance recognition test data and color sense recognition test data. The luminance recognition test data may have a value based on selected luminance which is selected from the test image. The color sense recognition test data may have a value based on selected color which is selected from the test image.

In an embodiment, when the test image include a first luminance and a second luminance higher than the first luminance and the selected luminance is the second luminance of the first luminance and the second luminance, a first converted luminance of the converted input image data may be lower than a luminance of the input image data.

In an embodiment, wherein when the selected color is a first color, a second color coordinate of a second color which is complementary color of the first color may be converted.

In an embodiment, when the selected color is the first color, the second color coordinate after conversion may be closer to a first color coordinate of the first color than the second color coordinate before the conversion.

As described above, according to the display apparatus and the method of driving the display panel, a luminance and color coordinates of an image displayed on the display panel may be controlled based on test data reflecting the user's sensitivity. For example, when the user is sensitive to a luminance change (e.g., luminance reduction rate), the luminance of the image displayed on the display panel may be decreased overall. Accordingly, deterioration of pixel may be reduced. The deterioration of the pixel may be reduced, the lifetime of the display panel may be effectively improved.

Additionally, when the user is sensitive to a certain color, a color coordinate of a complementary color of the certain color may be close to a color coordinate of the certain color. Accordingly, the color of the image displayed on the display panel may be similar to the certain color as a whole. Accordingly, when the pixel included in the display panel is deteriorated, the certain color may not be recognized as an afterimage. The certain color may not be recognized as an afterimage, the timepoint at which the user recognizes the afterimage may be delayed. Accordingly, the lifetime of the display panel may be effectively improved.

At least some of the above and other features of the invention are set out in the claims.

### BRIEF DESCRIPTION OF THE DRAWINGS

Illustrative, non-limiting embodiments will be more clearly understood from the following detailed description in conjunction with the accompanying drawings.
FIG. 1 is a block diagram illustrating a display apparatus according to embodiments of the present invention.
FIG. 2 is a block diagram illustrating an example of a driving controller of FIG. 1.
FIG. 3 is a diagram illustrating an example of a test image displayed on a display panel of FIG. 1.
FIG. 4 is a diagram illustrating another example of a test image displayed on the display panel of FIG. 1.
FIG. 5 is a diagram illustrating still another example of a test image displayed on a display panel of FIG. 1.
FIG. 6 is a diagram illustrating yet another example of a test image displayed on a display panel of FIG. 1.
FIG. 7 is a graph illustrating a luminance level determined by a driving controller of FIG. 1.
FIG. 8 is a graph illustrating color sense level determined by a driving controller of FIG. 1.
FIG. 9 is a table illustrating a converted luminance corresponding to a luminance level of FIG. 7.
FIG. 10 is a table illustrating a converted color coordinate corresponding to a color sense level of FIG. 8.
FIG. 11 is a graph illustrating a set color coordinate a converted color coordinate of FIG. 10.
FIG. 12 is a graph illustrating a lifetime according to driving time of display panel of FIG. 1.
FIG. 13 is a circuit diagram illustrating an example of a pixel of FIG. 1.
FIG. 14 is a table illustrating a converted luminance corresponding to a luminance level of FIG. 7 and a second power voltage.
FIG. 15 is a circuit diagram illustrating another example of a pixel of FIG. 1.
FIG. 16 is a graph illustrating a luminance level determined by a driving controller of FIG. 1 according to another embodiment.
FIG. 17 is a block diagram illustrating another example of a driving controller of FIG. 1.
FIG. 18 is a flowchart illustrating an example of a method of driving a display panel of FIG. 1.
FIG. 19 is a block diagram illustrating an electronic device according to an embodiment of the present invention.
FIG. 20 is a diagram illustrating an example in which the electronic device of FIG. 19 is implemented as a smart phone.

### DETAILED DESCRIPTION

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

Hereinafter, the present invention will be explained in detail with reference to the accompanying drawings.

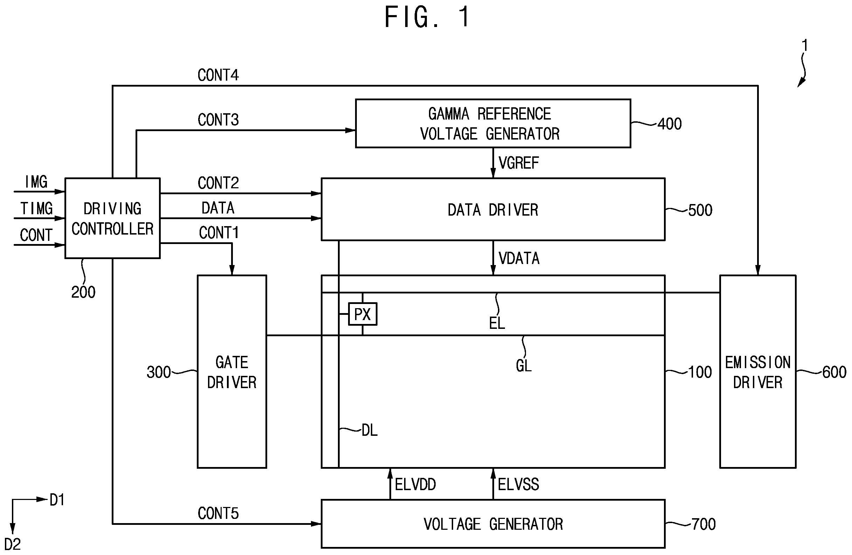

FIG. 1 is a block diagram illustrating a display apparatus 1 according to embodiments of the present invention.

Referring to FIG. 1, the display apparatus 1 includes a display panel 100 and a display panel driver. The display panel driver includes a driving controller 200, a gate emission driver 300, a gamma reference voltage generator 400 and a data driver 500. In an embodiment, the display apparatus 1 may include an emission driver 600 and a voltage generator 700.

The display panel 100 has a display region on which an image is displayed and a peripheral region adjacent to the display region.

The display panel 100 includes a plurality of gate lines GL, plurality of emission lines EL, a plurality of data lines DL and a plurality of pixels electrically connected to the gate lines GL, the emission lines EL and the data lines DL. The gate lines GL may extend in a first direction D1, the emission lines EL may extend in the first direction D1 and the data lines DL may extend in a second direction D2 crossing the first direction D1. For example, D1 and D2 may be substantially perpendicular. It will be understood that the directions discussed herein are example directions expressed relative to the display panel 100, and do not imply any particular orientation of the panel 100.

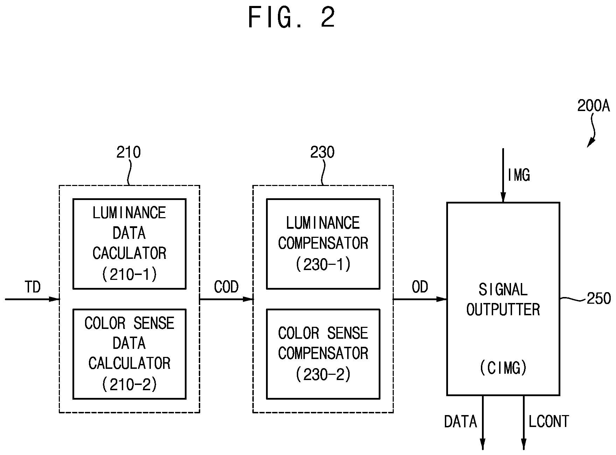

The driving controller 200 receives input image data IMG, test image data TIMG and an input control signal CONT from an external apparatus. In an embodiment, the driving controller 200 may further receive test data TD of FIG. 2 from an external apparatus. For example, the input image data IMG may include red image data, green image data and blue image data. The input image data IMG may include white image data. The input image data IMG may include magenta image data, cyan image data and yellow image data. For example, the test image data TIMG may include red image data, green image data and blue image data. The test image data TIMG may include white image data. The test image data TIMG may include magenta image data, cyan image data and yellow image data. For example, the test data TD of FIG. 2 may be generated based on the test image data TIMG. The input control signal CONT may include a master clock signal and a data enable signal. The input control signal CONT may further include a vertical synchronizing signal and a horizontal synchronizing signal.

The driving controller 200 generates a first control signal CONT1, a second control signal CONT2, a third control signal CONT3 and a data signal DATA based on the input image data IMG, the test image data TIMG and the input control signal CONT. In an embodiment, the driving controller 200 may further generate a fourth control signal CONT4 and a fifth control signal CONT5.

The driving controller 200 generates the first control signal CONT1 for controlling an operation of the gate emission driver 300 based on the input control signal CONT, and outputs the first control signal CONT1 to the gate emission driver 300. The first control signal CONT1 may include a vertical start signal and a gate clock signal.

The driving controller 200 generates the second control signal CONT2 for controlling an operation of the data driver 500 based on the input control signal CONT, and outputs the second control signal CONT2 to the data driver 500. The second control signal CONT2 may include a horizontal start signal and a load signal.

The driving controller 200 generates the data signal DATA based on the input image data IMG. The driving controller 200 outputs the data signal DATA to the data driver 500.

The driving controller 200 generates the third control signal CONT3 for controlling an operation of the gamma reference voltage generator 400 based on the input control signal CONT and the test data TD of FIG. 2, and outputs the third control signal CONT3 to the gamma reference voltage generator 400. In an embodiment, the third control signal CONT3 may include a luminance control signal LCONT of FIG. 2.

In an embodiment, the driving controller 200 generates the fourth control signal CONT4 for controlling an operation of the emission driver 600 based on the input control signal CONT, and outputs the fourth control signal CONT4 to the emission driver 600.

In an embodiment, the driving controller 200 generates the fifth control signal CONT5 for controlling an operation of the voltage generator 700 based on the input control signal CONT and the test data TD of FIG. 2, and outputs the fifth control signal CONT5 to the voltage generator 700.

The gate driver 300 generates gate signals driving the gate lines GL in response to the first control signal CONT1 received from the driving controller 200. The gate driver 300 may output the gate signals to the gate lines GL. In an embodiment, the gate signals may include a write gate signal, a compensation signal, an initialization gate signal and a bias gate signal.

In an embodiment, the gate driver 300 may be disposed in the peripheral region. In an embodiment, the gate driver 300 may be integrated in the peripheral region.

The gamma reference voltage generator 400 generates a gamma reference voltage VGREF in response to the third control signal CONT3 received from the driving controller 200. In an embodiment, the gamma reference voltage generator 400 may change the gamma reference voltage VGREF in response to the luminance control signal LCONT of FIG. 2 received from the driving controller 200. For example, the gamma reference voltage generator 400 may change a range of the gamma reference voltage VGREF in response to the luminance control signal LCONT of FIG. 2. The gamma reference voltage generator 400 provides the gamma reference voltage VGREF to the data driver 500. The gamma reference voltage VGREF has a value corresponding to a level of the data signal DATA.

In an embodiment, the gamma reference voltage generator 400 may be disposed in the driving controller 200, or in the data driver 500.

The data driver 500 receives the second control signal CONT2 and the data signal DATA from the driving controller 200, and receives the gamma reference voltages VGREF from the gamma reference voltage generator 400. The data driver 500 converts the data signal DATA into data voltages VDATA having an analog type using the gamma reference voltages VGREF. The data driver 500 outputs the data voltages VDATA to the data lines DL.

In an embodiment, the data driver 500 may be disposed in the peripheral region. In an embodiment, the data driver 500 may be integrated in the peripheral region.

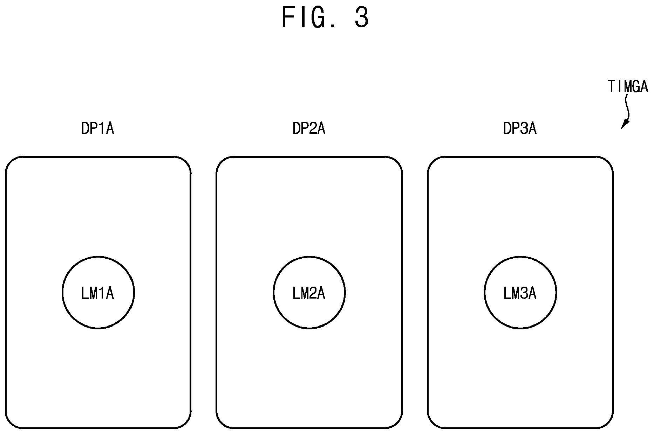

In an embodiment, the emission driver 600 may generate emission signal EM of FIG. 3 in response to the fourth control signal CONT4 received from the driving controller 200. The emission driver 600 may output the emission signal EM of FIG. 3 to the display panel 100.

In an embodiment, the emission driver 600 may be disposed in the peripheral region. In an embodiment, the emission driver 600 may be integrated in the peripheral region.

Although the gate driver 300 is disposed on a first side of the display panel 100, and the emission driver 600 is disposed on a second side of the display panel 100 in FIG. 1 for convenience of explanation, the present invention is not limited thereto. The gate driver 300 and the emission driver 600 may be disposed on the first side of the display panel 100. For example, the gate driver 300 and the emission driver 600 may be disposed on the peripheral region of the display panel 100 on the same side of the display region of the display panel 100. For example, the gate driver 300 and the emission driver 600 may be formed integrally with each other.

In an embodiment, the voltage generator 700 may generate a first power voltage ELVDD and a second power voltage ELVSS in response to the fifth control signal CONT5 received from the driving controller 200. The power voltage generator 700 may output the first power voltage ELVDD and the second power voltage ELVSS to the display panel 100.

FIG. 2 is a block diagram illustrating an example of a driving controller of FIG. 1.

Referring to FIG. 1 and FIG. 2, a driving controller 200A may include a data calculator 210, a compensator 230 and a signal outputter 250.

The data calculator 210 may receive test data TD. The data calculator 210 may output calculation data COD to the compensator 230 based on the test data TD. The data calculator 210 may include a luminance data calculator 210-1 and a color sense data calculator 210-2. The test data TD may include luminance recognition test data and a color sense recognition test data.

The compensator 230 may receive the calculation data COD. The compensator 320 may output offset data OD to the signal outputter 250 based on the calculation data COD. The compensator 230 may include a luminance compensator 230-1 and a color sense compensator 230-2.

The signal outputter 250 may receive the input image data IMG and the offset data OD. The signal outputter 250 may convert the input image data IMG to converted input image data CIMG based on the offset data OD. For example, a luminance of the converted input image data CIMG may be different from a luminance of the input image data IMG. For example, a color coordinate of the converted input image data CIMG may be different from a color coordinate of the input image data IMG. The signal outputter 250 may output the data signal DATA based on the converted input image data CIMG. The signal outputter 250 may output a luminance control signal LCONT based on the converted input image data CIMG.

FIG. 3 is a diagram illustrating an example of a test image displayed on a display panel 100 of FIG. 1.

Referring to FIG. 1 to FIG. 3, the display panel 100 may display a test image TIMGA based on the test image data TIMG.

In the present embodiment, the test image TIMGA may be a "luminance test image". The test image TIMGA may include a first luminance image DP1A, a second luminance image DP2A and a third luminance image DP3A. The first luminance image DP1A may include a first background region and a first luminance region LM1A. The first luminance region LM1A may emit a first test luminance. The first background region, which is the remaining region in the first luminance image DP1A except for the first luminance region LM1A, may emit a background luminance. For example, the background luminance may be about 100%. That is, the background luminance may be the maximum luminance. The second luminance image DP2A may include a second background region and a second luminance region LM2A. The second luminance region LM2A may emit a second test luminance. The second background region, which is the remaining region in the second luminance image DP2A except for the second luminance region LM2A, may emit the background luminance. The second test luminance may be lower than the first test luminance. The third luminance image DP3A may include a third background region and a third luminance region LM3A. The third luminance region LM3A may emit a third test luminance. The third background region, which is the remaining region in the third luminance image DP3A except for the third luminance region LM3A, may emit the background luminance. The third test luminance may be lower than the second test luminance. However, the present invention is not limited to the number of luminance images included in the test image TIMGA shown in FIG. 3. For another example, the number of the luminance images may be set by setter. The setter may for example be a human operator such as a system administrator, or an automated computer program process. Additionally, the present invention is not limited to a shape of the luminance regions.

The first test luminance may be lower than the background luminance. For example, the first test luminance may be about 99%. The second test luminance may be lower than the first test luminance. For example, the second test luminance may be about 98%. The third test luminance may be lower than the second test luminance. For example, the third test luminance may be about 97%. However, the present invention is not limited to a value of the test luminance.

For example, when a user selects a first luminance image DP1A, the display panel 100 may display the second luminance image DP2A. For example, when the user does not select the second luminance region LM2A of the second luminance image DP2A within a certain time, the first test luminance may be a selected luminance. For example, the test image TIMGA may further include a completion region. For example, when the user selects the completion region of the third luminance image DP3A, the second test luminance may be the selected luminance. The luminance recognition test data may be determined based on the selected luminance. For example, the luminance recognition test data may have a value based on the selected luminance. In an embodiment, the selection of the user may be selected by a touch of the user. The user selection may be in response to a request to indicate a luminance region which they can perceive as being different from the background luminance. The test thus allows determination of a luminance lower than 100% which the user perceives as equivalent to 100%. The same may apply to the other tests discussed below.

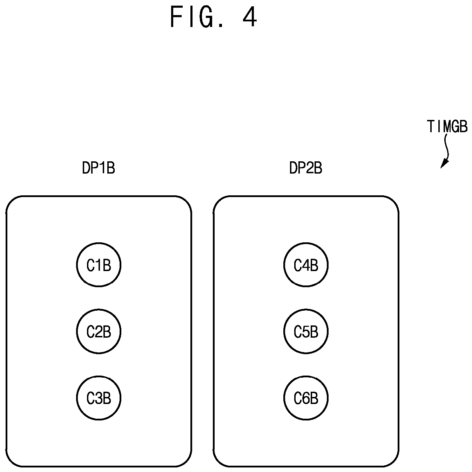

FIG. 4 is a diagram illustrating another example of a test image displayed on the display panel 100 of FIG. 1.

Referring to FIG. 1, FIG. 2 and FIG. 4, the display panel 100 may display a test image TIMGB based on the test image data TIMG.

In the present embodiment, the test image TIMGB may be a "color sense test image". The test image TIMGB may include a first color sense image DP1B and a second color sense image DP2B. The first color sense image DP1B may include a first color region C1B, a second color region C2B and a third color region C3B. For example, the first color region C1B may emit red color. For example, the second color region C2B may emit green color. For example, the third color region C3B may emit blue color. The second color sense image DP2B may include a fourth color region C4B, a fifth color region C5B and a sixth color region C6B. For example, the fourth color region C4B may emit magenta color. For example, the fifth color region C5B may emit cyan color. For example, the sixth color region C6B may emit yellow color. For example, the test image TIMGB may include only one of the first color sense image DP1B and the second color sense image DP2B. However, the present invention is not limited to a color which the first to sixth color regions C1B, C2B, C3B, C4B, C5B and C6B emit. For another example, a wavelength of the color of the first color region C1B and a wavelength of the color of the second color region C2B may be different from each other. Additionally, the present invention is not limited to the number of color sense images included in the test image TIMGB. For another example, the first to sixth color regions C1B, C2B, C3B, C4B, C5B and C6B may be included on one color sense test image. For example, the number of the color sense image may be set by a setter. Additionally, the present invention is not limited to a shape of the color regions. For example, when the user selects the first color region C1B, a color of the first color region C1B may be a selected color. For example, when the user selects the second color region C2B, a color of the second color region C2B may be the selected color. Color sense test data may be determined based on the selected color. For example, the color sense test data may have a value based on the selected color. In an embodiment, the selection of the user may be selected by a touch of the user.

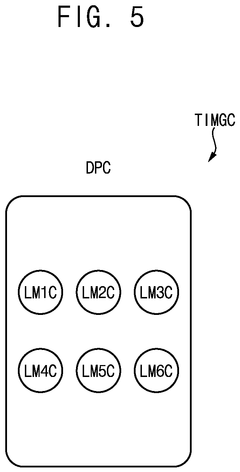

FIG. 5 is a diagram illustrating still another example of a test image displayed on a display panel 100 of FIG. 1.

Referring to FIG. 1, FIG. 2 and FIG. 5, the display panel 100 may display a test image TIMGC based on the test image data TIMG.

In the present embodiment, the test image TIMGC may be the luminance test image. The test image TIMGC may include a luminance image DPC. The luminance image DPC may include first to sixth luminance regions LM1C, LM2C, LM3C, LM4C, LM5C and LM6C. The first luminance region LM1C may emit the first test luminance. The second luminance region LM2C may emit the second test luminance. The third luminance region LM3C may emit the third test luminance. The fourth luminance region LM4C may emit a fourth test luminance. The fourth test luminance may be lower than the third test luminance. The fifth luminance region LM5C may emit a fifth test luminance. The fifth test luminance may be lower than the fourth test luminance. The sixth luminance region LM6C may emit a sixth test luminance. The sixth test luminance may be lower than the fifth test luminance. However, the present invention is not limited to a shape of the luminance regions. For another example, when the user selects the third luminance region LM3C, the third test luminance may be the selected luminance. For example, when the user selects the fifth luminance region LM5C, the fifth test luminance may be the selected luminance. In an embodiment, the selection of the user may be selected by a touch of the user.

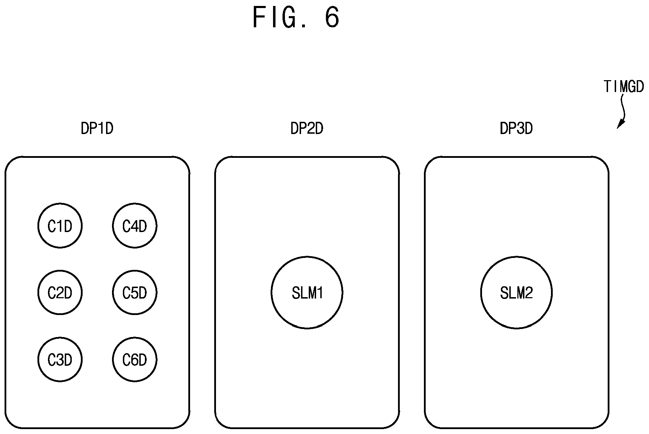

FIG. 6 is a diagram illustrating yet another example of a test image displayed on a display panel 100 of FIG. 1.

Referring to FIG. 1, FIG. 2 and FIG. 6, the display panel 100 may display an integrated test image TIMGD based on the test image data TIMG.

In the present embodiment, the integrated test image TIMGD may include a first test image DP1D, a second test image DP2D and a third test image DP3D.

The first test image DP1D may be the color sense test image. The first test image DP1D may include first to sixth color regions C1D, C2D, C3D, C4D, C5D and C6D. For example, each region of the first to sixth color regions C1D, C2D, C3D, C4D, C5D and C6D may emit a light of different wavelength from other color regions. A color of selected region selected from the first to sixth color regions C1D, C2D, C3D, C4D, C5D and C6D may be the selected color. The second test image DP2D may include a first selected luminance region SLM1 having the selected color. The first selected luminance region SLM1 may emit the first test luminance. The third test image DP3D may include a second selected luminance region SLM2 having the selected color. The second selected luminance region SLM2 may emit the second test luminance. However, the present invention is not limited to the number of test images included in the integrated test image TIMGD. For another example, the number of the test images may be set by a setter. Additionally, the present invention is not limited to a shape of color regions and luminance regions. For another example, when the user selects the first selected luminance region SLM1, the display panel 100 may display the third test image DP3D. For example, when the user does not select the second selected luminance region SLM2 of the third test image DP3D within a certain time, the first test luminance may be a selected luminance. For example, the second to third test images DP2D and DP3D may further include a completion region. For example, when the user selects the completion region of the third test image DP3D, the first test luminance may be the selected luminance. For example, the selection of the user may be selected by a touch of the user.

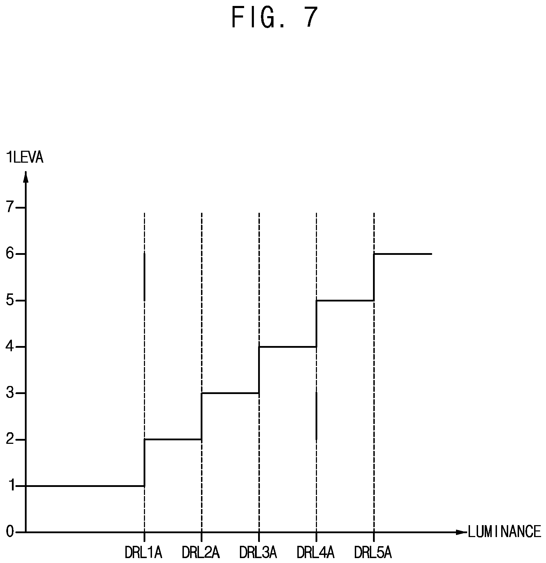

FIG. 7 is a graph illustrating a luminance level 1LEVA determined by a driving controller 200 of FIG. 1.

Referring to FIG. 1 to FIG. 7, the driving controller 200 may determine a luminance level 1LEVA. For example, the luminance data calculator 210-1 included in the driving controller 200 may determine the luminance level 1LEVA. When the selected luminance is higher than a fifth luminance DRL5A, the luminance level 1LEVA may be a sixth luminance level. When the selected luminance is lower than the fifth luminance DRL5A and higher than a fourth luminance DRL4A, the luminance level 1LEVA may be a fifth luminance level. When the selected luminance is lower than the fourth luminance DRL4A and higher than a third luminance DRL3A, the luminance level 1LEVA may be a fourth luminance level. When the selected luminance is lower than the third luminance DRL3A and higher than a second luminance DRL2A, the luminance level 1LEVA may be a third luminance level. When the selected luminance is lower than the second luminance DRL2A and higher than a first luminance DRL1A, the luminance level 1LEVA may be a second luminance level. When the selected luminance is lower than a first luminance DRL1A, the luminance level 1LEVA may be a first luminance level. However, the present invention is not limited to the number of the luminance level 1LEVA. The calculation data COD may include data of the luminance level 1LEVA.

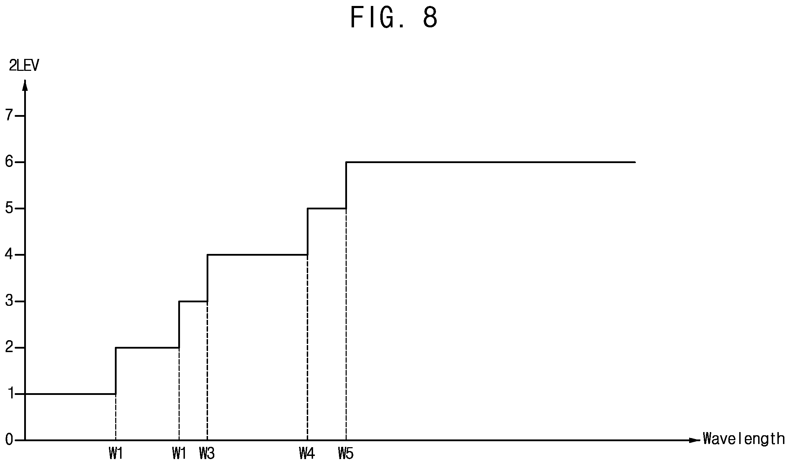

FIG. 8 is a graph illustrating color sense level 2LEV determined by a driving controller 200 of FIG. 1.

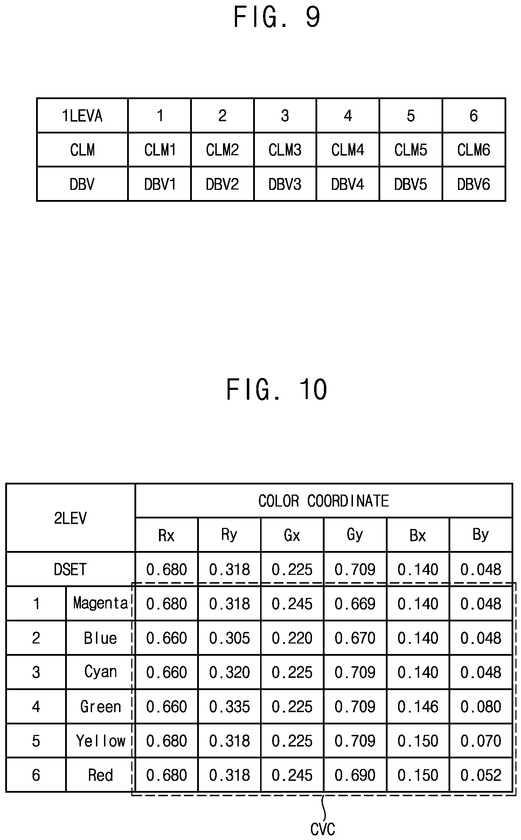

Referring to FIG. 1 to FIG. 6 and FIG. 8, the driving controller 200 may determine a color sense level 2LEV. For example, the color sense data calculator 210-2 included in the driving controller 200A may determine the color sense level 2LEV. When a wavelength of the selected color is shorter than a first wavelength W1, the color sense level 2LEV may be a first color sense level. When a wavelength of the selected color is longer than the first wavelength W1 and shorter than a second wavelength W2, the color sense level 2LEV may be a second color sense level. When a wavelength of the selected color is longer than the second wavelength W2 and shorter than a third wavelength W3, the color sense level 2LEV may be a third color sense level. When a wavelength of the selected color is longer than the third wavelength W3 and shorter than a fourth wavelength W4, the color sense level 2LEV may be a fourth color sense level. When a wavelength of the selected color is longer than the fourth wavelength W4 and shorter than a fifth wavelength W5, the color sense level 2LEV may be a fifth color sense level. When a wavelength of the selected color is longer than the fifth wavelength W5 and shorter than a sixth wavelength W6, the color sense level 2LEV may be a sixth color sense level. As used herein, the magenta color is considered to have a wavelength shorter than a blue color to apply the conversion of the complementary color coordinate to be explained in FIG. 10. However, the present invention is not limited to the number of the color sense level 2LEV. The calculation data COD may include data of the color sense level 2LEV.

FIG. 9 is a table illustrating a converted luminance CLM corresponding to a luminance level 1LEVA of FIG. 7.

Referring to FIG. 1 to FIG. 7 and FIG. 9, the driving controller 200 may convert a luminance of the input image data IMG based on the luminance level 1LEVA. The luminance compensator 230-1 may determine the converted luminance CLM based on the luminance level 1LEVA.

For example, when data of the first luminance level is applied to the luminance compensator 230-1, the luminance compensator 230-1 may output a first luminance offset data which converts a luminance of the input image data IMG to the first converted luminance CLM1. For example, the first converted luminance CLM1 may be about 100% of the input image data IMG. When the first converted luminance CLM1 is about 100%, a luminance of the input image data IMG may not be changed. For example, when the first luminance offset data is applied to the signal outputter 250, a luminance of the input image data IMG and a luminance of the converted input image data CIMG may be substantially the same.

For example, when data of the second luminance level is applied to the luminance compensator 230-1, the luminance compensator 230-1 may output a second luminance offset data which converts a luminance of the input image data IMG to the second converted luminance CLM2. For example, the second converted luminance CLM1 may be about 98% of the input image data IMG.

For example, when data of the third luminance level is applied to the luminance compensator 230-1, the luminance compensator 230-1 may output a third luminance offset data which converts a luminance of the input image data IMG to the third converted luminance CLM3. For example, the third converted luminance CLM3 may be about 96% of the input image data IMG.

For example, when data of the fourth luminance level is applied to the luminance compensator 230-1, the luminance compensator 230-1 may output a fourth luminance offset data which converts a luminance of the input image data IMG to the fourth converted luminance CLM4. For example, the fourth converted luminance CLM4 may be about 94% of the input image data IMG.

For example, when data of the fifth luminance level is applied to the luminance compensator 230-1, the luminance compensator 230-1 may output a fifth luminance offset data which converts a luminance of the input image data IMG to the fifth converted luminance CLM5. For example, the fifth converted luminance CLM5 may be about 92% of the input image data IMG.

For example, when data of the sixth luminance level is applied to the luminance compensator 230-1, the luminance compensator 230-1 may output a sixth luminance offset data which converts a luminance of the input image data IMG to the sixth converted luminance CLM6. For example, the sixth converted luminance CLM6 may be about 90% of the input image data IMG.

For example, when the luminance of the input image data IMG is about 90% of the maximum luminance and the sixth luminance offset data is applied to the signal outputter 250, the luminance of the converted input image data CIMG may be about 81% of the maximum luminance. When a luminance of a first image region of the input image data IMG is about 100% of the maximum luminance, a luminance of a second image region of the input image data IMG is about 90% of the maximum luminance and the sixth luminance offset data is applied to the signal outputter 250, a luminance of the first image region of the converted input image data CIMG may be about 90% of the maximum luminance and a luminance of the second image region of the converted input image data CIMG may be about 81% of the maximum luminance. The offset data OD includes luminance offset data corresponding to the determined converted luminance among the first to sixth luminance offset data.

For example, when the input image data IMG may be converted to the first converted luminance CLM1, the gamma reference voltage VGREF may have a first luminance voltage range DBV1. When the gamma reference voltage VGREF has the first luminance voltage range DBV1, a range of the data voltage VDATA may have a range corresponding to the first luminance voltage range DBV1.

For example, when the input image data IMG may be converted to the second converted luminance CLM2, the gamma reference voltage VGREF may have a second luminance voltage range DBV2. When the gamma reference voltage VGREF has the second luminance voltage range DBV2, a range of the data voltage VDATA may have a range corresponding to the second luminance voltage range DBV2. The second luminance voltage range DBV2 may be narrower than the first luminance voltage range DBV1.

For example, when the input image data IMG may be converted to the third converted luminance CLM3, the gamma reference voltage VGREF may have a third luminance voltage range DBV3. When the gamma reference voltage VGREF has the third luminance voltage range DBV3, a range of the data voltage VDATA may have a range corresponding to the third luminance voltage range DBV3. The third luminance voltage range DBV3 may be narrower than the second luminance voltage range DBV2.

For example, when the input image data IMG may be converted to the fourth converted luminance CLM4, the gamma reference voltage VGREF may have a fourth luminance voltage range DBV4. When the gamma reference voltage VGREF has the fourth luminance voltage range DBV4, a range of the data voltage VDATA may have a range corresponding to the fourth luminance voltage range DBV4. The fourth luminance voltage range DBV4 may be narrower than the third luminance voltage range DBV3.

For example, when the input image data IMG may be converted to the fifth converted luminance CLM5, the gamma reference voltage VGREF may have a fifth luminance voltage range DBV5. When the gamma reference voltage VGREF has the fifth luminance voltage range DBV5, a range of the data voltage VDATA may have a range corresponding to the fifth luminance voltage range DBV5. The fifth luminance voltage range DBV5 may be narrower than the fourth luminance voltage range DBV4.

For example, when the input image data IMG may be converted to the sixth converted luminance CLM6, the gamma reference voltage VGREF may have a sixth luminance voltage range DBV6. When the gamma reference voltage VGREF has the sixth luminance voltage range DBV6, a range of the data voltage VDATA may have a range corresponding to the sixth luminance voltage range DBV6. The sixth luminance voltage range DBV6 may be narrower than the fifth luminance voltage range DBV5. Therefore, when the luminance level 1LEVA is higher, the range of the gamma reference voltage VGREF may be narrower.

In the present embodiment, a luminance of the display panel 100 may be controlled based on the test data TD. For example, when the user is sensitive to luminance change (e.g., a luminance reduction rate), the luminance level 1LEVA may be high. When the luminance level 1LEVA is high, the converted luminance CLM may be low. When the converted luminance CLM is low, a luminance of the image displayed on the display panel 100 may be reduced. Accordingly, a deterioration of the pixel PX may be reduced. When the deterioration of the pixel PX is reduced, the lifetime of the display panel 100 may be effectively improved.

In the present embodiment, when the converted luminance CLM is decreased, a luminance voltage range DBV may be decreased. When the luminance voltage range DBV is decreased, a power consumption of the display apparatus 1 may be reduced. Additionally, when the luminance voltage range DBV is decreased, the range of the data voltage VDATA may be reduced. Accordingly, a stress applied to pixel PX may be reduced.

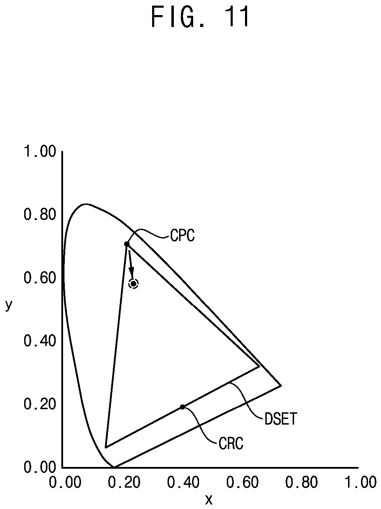

FIG. 10 is a table illustrating a converted color coordinate CVC corresponding to a color sense level 2LEV of FIG. 8. FIG. 11 is a graph illustrating a set color coordinate DSET and a converted color coordinate CVC of FIG. 10.

Referring to FIG. 1 to FIG. 7, FIG. 10 and FIG. 11, the driving controller 200 may convert a color coordinate of the input image data IMG based on the color sense level 2LEV. The color sense compensator 230-2 may determine the converted color coordinate CVC based on the color sense level 2LEV.

In the present embodiment, a red X-axis (Rx) color coordinate of the set color coordinate DSET may be about 0.680. A red Y-axis (Ry) color coordinate of the set color coordinate DSET may be about 0.318. A green X-axis (Gx) color coordinate of the set color coordinate DSET may be about 0.225. A green Y-axis (Gy) color coordinate of the set color coordinate DSET may be about 0.709. A blue X-axis (Bx) color coordinate of the set color coordinate DSET may be about 0.140. A blue Y-axis (By) color coordinate of the set color coordinate DSET may be about 0.048.

In the present embodiment, the set color coordinate DSET may be converted to the converted color coordinate CVC based on the color sense level 2LEV. For example, the complementary color coordinate of the color corresponding to the color sense level 2LEV may be converted. For example, when magenta corresponds to the first color sense level, the color coordinate of green, which is the complementary color of magenta, may be converted. For example, when blue corresponds to the second color sense level, the color coordinates of red and green, which are the complementary colors of blue, may be converted. For example, the complementary color coordinate CPC of the color corresponding to the color sense level 2LEV may be close to the corresponding color coordinate CRC of the color corresponding to the color sense level 2LEV by the conversion.

For example, when data of the first color sense level is applied to the color compensator 230-2, the color compensator 230-2 may output first color sense offset data which converts the complementary color coordinates of magenta of the input image data IMG. For example, when data of the second color sense level is applied to the color compensator 230-2, the color compensator 230-2 may output second color sense offset data which converts the complementary color coordinates of blue of the input image data IMG. For example, when data of the third color sense level is applied to the color compensator 230-2, the color compensator 230-2 may output third color sense offset data which converts the complementary color coordinates of cyan of the input image data IMG. For example, when data of the fourth color sense level is applied to the color compensator 230-2, the color compensator 230-2 may output fourth color sense offset data which converts the complementary color coordinates of green of the input image data IMG. For example, when data of the fifth color sense level is applied to the color compensator 230-2, the color compensator 230-2 may output fifth color sense offset data which converts the complementary color coordinates of yellow of the input image data IMG. For example, when data of the sixth color sense level is applied to the color compensator 230-2, the color compensator 230-2 may output sixth color sense offset data which converts the complementary color coordinates of red of the input image data IMG.

Based on the first color sense offset data, a red X-axis color coordinate of the converted color coordinate CVC may be about 0.680, a red Y-axis color coordinate of the converted color coordinate CVC may be about 0.318, a green X-axis color coordinate of the converted color coordinate CVC may be about 0.245, a green Y-axis color coordinate of the converted color coordinate CVC may be about 0.669, a blue X-axis color coordinate of the converted color coordinate CVC may be about 0.140 and a green Y-axis color coordinate of the converted color coordinate CVC may be about 0.048. Like this, a color coordinate of green may be converted based on the first color sense offset data.

Based on the second color sense offset data, a red X-axis color coordinate of the converted color coordinate CVC may be about 0.660, a red Y-axis color coordinate of the converted color coordinate CVC may be about 0.305, a green X-axis color coordinate of the converted color coordinate CVC may be about 0.220, a green Y-axis color coordinate of the converted color coordinate CVC may be about 0.670, a blue X-axis color coordinate of the converted color coordinate CVC may be about 0.140 and a green Y-axis color coordinate of the converted color coordinate CVC may be about 0.048. Like this, a color coordinate of red and green may be converted based on the second color sense offset data.

Based on the third color sense offset data, a red X-axis color coordinate of the converted color coordinate CVC may be about 0.660, a red Y-axis color coordinate of the converted color coordinate CVC may be about 0.320, a green X-axis color coordinate of the converted color coordinate CVC may be about 0.225, a green Y-axis color coordinate of the converted color coordinate CVC may be about 0.709, a blue X-axis color coordinate of the converted color coordinate CVC may be about 0.140 and a green Y-axis color coordinate of the converted color coordinate CVC may be about 0.048. Like this, a color coordinate of red may be converted based on the third color sense offset data.

Based on the fourth color sense offset data, a red X-axis color coordinate of the converted color coordinate CVC may be about 0.660, a red Y-axis color coordinate of the converted color coordinate CVC may be about 0.335, a green X-axis color coordinate of the converted color coordinate CVC may be about 0.225, a green Y-axis color coordinate of the converted color coordinate CVC may be about 0.709, a blue X-axis color coordinate of the converted color coordinate CVC may be about 0.146 and a green Y-axis color coordinate of the converted color coordinate CVC may be about 0.080. Like this, a color coordinate of red and blue may be converted based on the fourth color sense offset data.

Based on the fifth color sense offset data, a red X-axis color coordinate of the converted color coordinate CVC may be about 0.680, a red Y-axis color coordinate of the converted color coordinate CVC may be about 0.318, a green X-axis color coordinate of the converted color coordinate CVC may be about 0.225, a green Y-axis color coordinate of the converted color coordinate CVC may be about 0.709, a blue X-axis color coordinate of the converted color coordinate CVC may be about 0.150 and a green Y-axis color coordinate of the converted color coordinate CVC may be about 0.070. Like this, a color coordinate of blue may be converted based on the fifth color sense offset data.

Based on the sixth color sense offset data, a red X-axis color coordinate of the converted color coordinate CVC may be about 0.680, a red Y-axis color coordinate of the converted color coordinate CVC may be about 0.318, a green X-axis color coordinate of the converted color coordinate CVC may be about 0.245, a green Y-axis color coordinate of the converted color coordinate CVC may be about 0.690, a blue X-axis color coordinate of the converted color coordinate CVC may be about 0.150 and a green Y-axis color coordinate of the converted color coordinate CVC may be about 0.052. Like this, a color coordinate of green and blue may be converted based on the sixth color sense offset data. The offset data OD includes color sense offset data corresponding to the determined color sense level among the first to sixth color sense offset data.

In the present embodiment, a color coordinate may be controlled based on the test data TD. For example, when the user is sensitive to a certain color, a color coordinate of a complementary color of the certain color may be close to a color coordinate of the certain color. Accordingly, the color of the image displayed on the display panel 100 may be similar to the certain color as a whole. Accordingly, when the pixel PX included in the display panel 100 is deteriorated, the certain color may not be recognized as an afterimage. The certain color may not be recognized as an afterimage, the timepoint at which the user recognizes the afterimage may be delayed. Accordingly, the lifetime of the display panel 100 may be effectively improved.

For example, when the user is sensitive to red, the set color coordinate DSET may be converted to the converted color coordinate CVC based on the color sense test image. Accordingly, a color coordinate of cyan, which is a complementary color of red, may be close to a color coordinate of red. For example, a color coordinate of blue and a color coordinate of green may be converted. A color coordinate of blue and a color coordinate of green may be converted, the image displayed by the display panel 100 may be adjusted to be red overall. Accordingly, although a certain region of the display panel 100 deteriorates to red, the user may not recognize the certain region as an afterimage. Accordingly, the lifetime of the display panel 100 may be effectively improved.

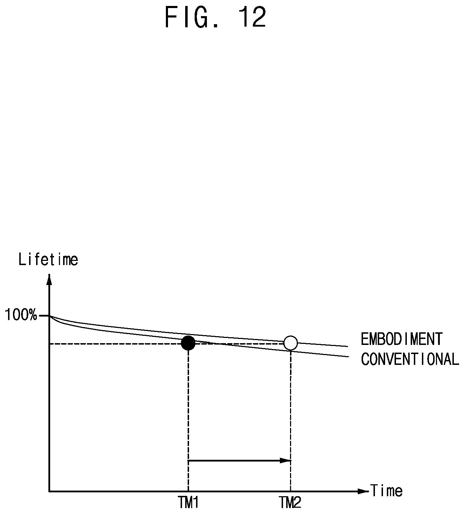

FIG. 12 is a graph illustrating a lifetime according to a driving time of display panel 100 of FIG. 1.

Referring to FIG. 1 to FIG. 12, an afterimage of a conventional display panel may be visible to a user in a first time TM1. Accordingly, the user may recognize the conventional display panel as defective at the first time TM1.

In contrast, display panel 100 according to the present invention may display the image based on the test data TD considering a luminance recognition and a color sense recognition of a user. Accordingly, a timepoint at which an afterimage is visible to user may be delayed. For example, the user may recognize an afterimage at a second time TM2 later than the first time TM1. Accordingly, the timepoint at which the user recognizes the display panel 100 as defective may be delayed.

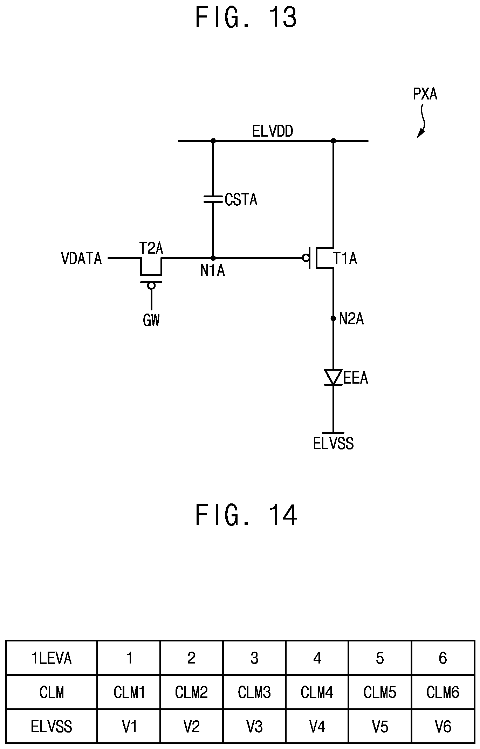

FIG. 13 is a circuit diagram illustrating an example of a pixel PX of FIG. 1.

Referring to FIG. 13, a pixel PXA may include a first transistor T1A, a second transistor T2A, a storage capacitor CSTA and a light emitting element EEA.

The first transistor T1A may include a control electrode connected to a first node N1A, a first electrode for receiving a first power voltage ELVDD and a second electrode connected to a second node N2A. The first transistor T1A may generate a driving current based on a voltage of the first node N1A. The first transistor T1A may output the driving current to the light emitting element EEA. The first transistor T1A may be called as a driving transistor.

The second transistor T2A may include a control electrode for receiving a write gate signal GW, a first electrode for receiving the data voltage VDATA and a second electrode connected to the first node N1A. The second transistor T2A may apply the data voltage VDATA to the first node N1A in response to the write gate signal GW. For example, the second transistor T2A may be called as a write transistor.

The storage capacitor CST may include a first electrode for receiving the first power voltage ELVDD and a second electrode connected to the first node N1A. The storage capacitor CSTA may store the voltage of the first node N1A.

The light emitting element EEA may include a first electrode connected to the second node N2A and a second electrode for receiving the second power voltage ELVSS. For example, the first electrode of the light emitting element EEA may be an anode. For example, the second electrode of the light emitting element EEA may be a cathode. The light emitting element EEA may emit light based on the driving current.

FIG. 14 is a table illustrating a converted luminance CLM corresponding to a luminance level 1LEVA of FIG. 7 and a second power voltage ELVSS.

Referring to FIG. 1 to FIG. 7, FIG. 13 and FIG. 14, the second power voltage ELVSS may be changed based on the test data TD.

For example, when the input image data IMG is converted to the first converted luminance CLM1, the second power voltage ELVSS may have a first voltage V1. When the input image data IMG is converted to the second converted luminance CLM2, the second power voltage ELVSS may have a second voltage V2. The second voltage V2 may be higher than the first voltage V1. When the input image data IMG is converted to the third converted luminance CLM3, the second power voltage ELVSS may have a third voltage V3. The third voltage V3 may be higher than the second voltage V2. When the input image data IMG is converted to the fourth converted luminance CLM4, the second power voltage ELVSS may have a fourth voltage V4. The fourth voltage V4 may be higher than the third voltage V3. When the input image data IMG is converted to the fifth converted luminance CLM5, the second power voltage ELVSS may have a fifth voltage V5. The fifth voltage V5 may be higher than the fourth voltage V4. When the input image data IMG is converted to the sixth converted luminance CLM6, the second power voltage ELVSS may have a sixth voltage V6. The sixth voltage V6 may be higher than the fifth voltage V5.

In the present embodiment, a luminance of the display panel 100 may be controlled based on the test data TD. For example, when the user is sensitive to luminance change (e.g., a luminance reduction rate), the luminance level 1LEVA may be high. When the luminance level 1LEVA is high, the converted luminance CLM may be low. When the converted luminance CLM is low, a luminance of the image displayed on the display panel 100 may be reduced. Accordingly, a deterioration of the pixel PX may be reduced. When the deterioration of the pixel PX is reduced, the lifetime of the display panel 100 may be effectively improved.

In the present embodiment, the second power voltage ELVSS may be changed based on the test data TD. For example, the second power voltage ELVSS may be changed based on the luminance level 1LEVA. The second power voltage ELVSS may be increased, a luminance of the display panel 100 may be reduced. For example, when the user is sensitive to luminance change (e.g., a luminance reduction rate), the luminance level 1LEVA may be high. When the luminance level 1LEVA is high, the converted luminance CLM may be low. When the converted luminance CLM is low, a luminance of the image displayed on the display panel 100 may be reduced. Accordingly, a deterioration of the pixel PX may be reduced. When the deterioration of the pixel PX is reduced, the lifetime of the display panel 100 may be effectively improved.

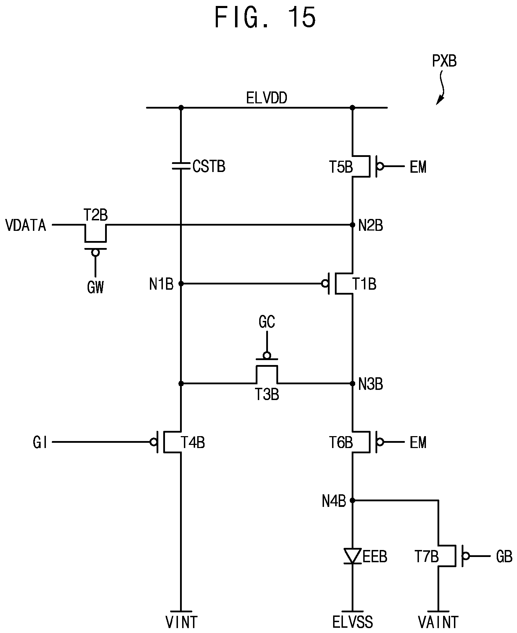

FIG. 15 is a circuit diagram illustrating another example of a pixel PX of FIG. 1.

Referring to FIG. 14, a pixel PXB may include a first transistor T1B, a second transistor T2B, a third transistor T3B, a fourth transistor T4B, a fifth transistor T5B, a sixth transistor T6B, a seventh transistor T7B, a storage capacitor CSTB and a light emitting element EEB.

A first transistor T1B may include a control electrode connected to a first node N1B, a first electrode connected to a second node N2B and a second electrode connected to a third node N3B. The first transistor T1B may generate a driving current based on a voltage of the first node N1B. For example, the first transistor T1B may be called as the driving transistor.

The second transistor T2B may include a control electrode for receiving the write gate signal GW, a first electrode for receiving the data voltage VDATA and a second electrode connected to the second node N2B. The second transistor T2B may apply the data voltage to the second node N2B in response to the write gate signal GW. For example, the second transistor T2B may be called as the write transistor.

The third transistor T3B may include a control electrode for receiving the compensation gate signal GC, a first electrode connected to the third node N3B and a second electrode connected to the first node N1B. The third transistor T3B may connect the first node N1B and the third node N3B in response to the compensation gate signal GC. For example, the third transistor T3B may diode-connect the first transistor T1B in response to the compensation gate signal GC. For example, the third transistor T3B may be called as a compensation transistor.

The fourth transistor T4B may include a control electrode for receiving the initialization gate signal GI, a first electrode for receiving an initialization voltage VINT and a second electrode connected to the first node N1B. The fourth transistor T4B may apply the initialization voltage VINT to the first node N1B in response to the initialization gate signal GI. For example, the fourth transistor T4B may be called as an initialization transistor.

The fifth transistor T5B may include a control electrode for receiving the emission signal EM, a first electrode for receiving the first power voltage ELVDD and a second electrode connected to connected to the second node N2B. The fifth transistor T5B may apply the first power voltage ELVDD to the second node N2B in response to the emission signal EM. For example, the fifth transistor T5B may be called as a second emission transistor.

The sixth transistor T6B may include a control electrode for receiving the emission signal EM, a first electrode connected to the third node N3B and a second electrode connected to a fourth node N4B. For example, the sixth transistor T6B may be called as a first emission transistor.

The seventh transistor T7B may include a control electrode for receiving the bias gate signal GB, a first electrode for receiving a light emitting element initialization voltage VAINT and a second electrode connected to the fourth node N4B. The seventh transistor T7B may apply the light emitting element initialization voltage VAINT to the fourth node N4B in response to the bias gate signal GB. For example, the light emitting element initialization voltage VAINT is lower than the second power voltage ELVSS. The light emitting element initialization voltage VAINT may be applied to the fourth node N4B, a black characteristic of the pixel PX may be effectively improved.

The storage capacitor CSTB may include a first electrode for receiving the first power voltage ELVDD and a second electrode connected to the first node N1B. The storage capacitor CSTB may store a voltage of the first node N1B.

The light emitting element may include a first electrode connected to the fourth node N4B and a second electrode for receiving the second power voltage ELVSS. The light emitting element EEB may emit light based on the driving current.

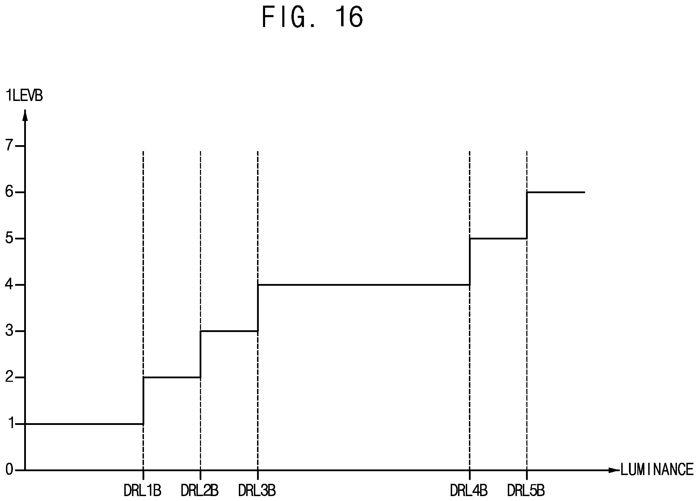

FIG. 16 is a graph illustrating a luminance level 1LEVB determined by a driving controller 200 of FIG. 1 according to another embodiment.

Referring to FIG. 16, the driving controller 200 may determine a luminance level 1LEVB. For example, the luminance data calculator 210-1 included in the driving controller 200 may determine the luminance level 1LEVB. When the selected luminance is higher than a fifth luminance DRL5B, the luminance level 1LEVB may be a sixth luminance level. When the selected luminance is lower than the fifth luminance DRL5B and higher than a fourth luminance DRL4B, the luminance level 1LEVB may be a fifth luminance level. When the selected luminance is lower than the fourth luminance DRL4B and higher than a third luminance DRL3B, the luminance level 1LEVB may be a fourth luminance level. When the selected luminance is lower than the third luminance DRL3B and higher than a second luminance DRL2B, the luminance level 1LEVB may be a third luminance level. When the selected luminance is lower than the second luminance DRL2B and higher than a first luminance DRL1B, the luminance level ILEVB may be a second luminance level. When the selected luminance is lower than a first luminance DRL1B, the luminance level 1LEVB may be a first luminance level. However, the present invention is not limited to the number of the luminance level ILEVB. The calculation data COD may include data of the luminance level 1LEVB.

The luminance level 1LEVB is substantially the same as the previous embodiment described with FIG. 1 to FIG. 7 except for a length of a range having the fourth luminance level. Therefore, the same reference numerals will be used and any repetitive explanation concerning the above elements will be omitted.

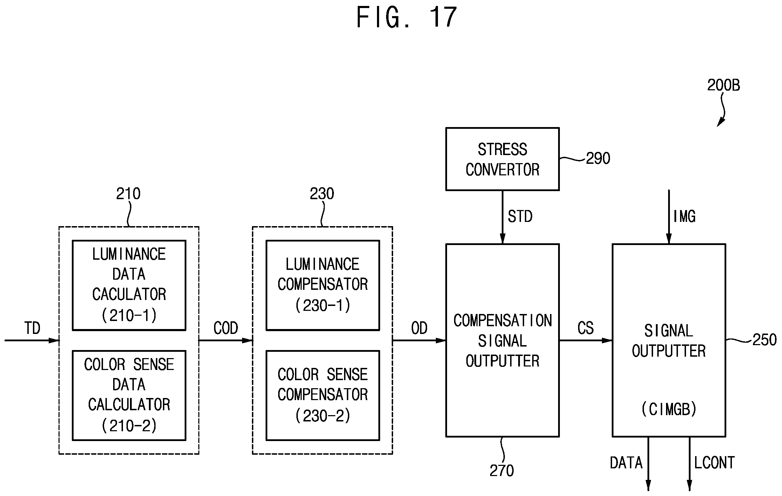

FIG. 17 is a block diagram illustrating another example of a driving controller of FIG. 1.

Referring to FIG. 17, a driving controller 200B may include the data calculator 210, the compensator 230, the signal outputter 250, a compensation signal outputter 270 and a stress converter 290.

The driving controller 200B is substantially the same as the previous embodiment described with FIG. 2 to FIG. 16 except that the driving controller 200B further includes the compensation signal outputter 270 and the stress converter 290. Therefore, the same reference numerals will be used and any repetitive explanation concerning the above elements will be omitted.

In the present embodiment, the driving controller 200B may further include the compensation signal outputter 270 and the stress converter 290.

The stress converter 290 may determine a cumulative deterioration of the display panel 100. For example, the cumulative deterioration may be a value considering a temperature, a driving time, and etc. of the display panel 100. For example, the stress converter 290 may output deterioration data STD based on the cumulative deterioration to the compensation signal outputter 270. The compensation signal outputter 270 outputs a compensation signal CS based on the offset data OD and the deterioration data STD. The signal outputter 250 may output the data signal DATA and the luminance control signal LCONT based on the compensation signal CS and the input image data IMG.

In the present embodiment, the driving controller 200B may further include the compensation signal outputter 270 and the stress converter 290, so that the converted input image data CIMGB considering the test data TD and the cumulative deterioration may be determined. Accordingly, a display quality of the display panel 100 may be further improved. Additionally, the timepoint at which the user recognizes the afterimage may be delayed. Accordingly, the timepoint at which the user recognizes the display panel 100 as defective may be delayed.

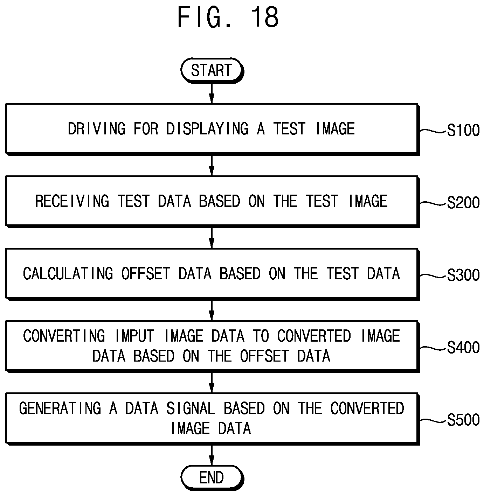

FIG. 18 is a flowchart illustrating an example of a method of driving a display panel 100 of FIG. 1.

Referring to FIG. 1 to FIG. 18, the display panel driver may drive for displaying the test image. (S100) The display panel driver may receive the test data TD based on the test image. (S200) The display panel driver may calculate the offset data OD based on the test data TD. (S300) The display panel driver may convert the input image data IMG to the converted input image data CIMG. (S400) The display panel driver may generate the data signal DATA based on the converted input image data CIMG. (S500)

In the present embodiment, the display panel 100 may display the image based on the test data TD considering the luminance recognition and the color sense recognition. Additionally, the timepoint at which the user recognizes the afterimage may be delayed. Accordingly, the timepoint at which the user recognizes the display panel 100 as defective may be delayed.

As used in connection with various embodiments of the disclosure, each of the luminance data calculator 210-1, the color sense data calculator 210-2, the luminance compensator 230-1, the color sense compensator 230-2, the signal outputter 250, the compensation signal outputter 270 and the stress converter 290 may be implemented in hardware, software, or firmware, for example, implemented in a form of an application-specific integrated circuit (ASIC).

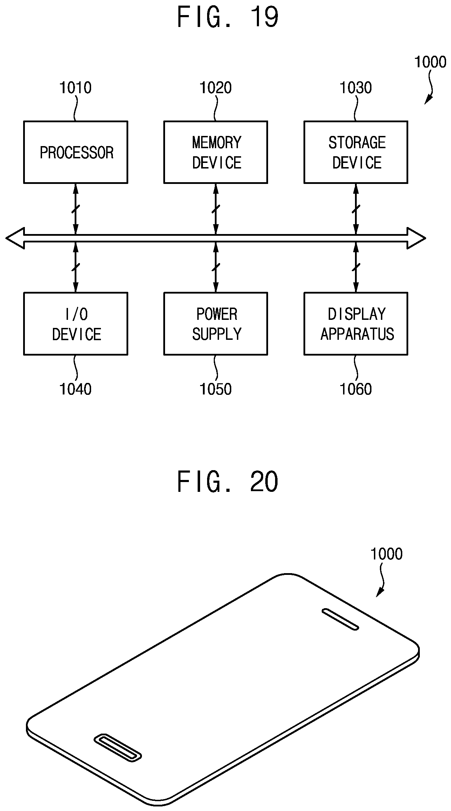

FIG. 19 is a block diagram illustrating an electronic device 1000 according to an embodiment of the present invention. FIG. 20 is a diagram illustrating an example in which the electronic device of FIG. 19 is implemented as a smart phone.

Referring to FIG. 1 and FIG. 19, the electronic device 1000 may include a processor 1010, a memory device 1020, a storage device 1030, an input/output (I/O) device 1040, a power supply 1050, and a display apparatus 1060. Here, the display apparatus 1060 may be the display apparatus 1 of FIG. 1. Additionally, the electronic device 1000 may further include a plurality of ports for communicating with a video card, a sound card, a memory card, a universal serial bus (USB) device, other electronic devices, etc.

In an embodiment, as illustrated in FIG. 20, the electronic device 1000 may be implemented as a smart phone. However, the electronic device 1000 is not limited thereto. For example, the electronic device 1000 may be implemented as a cellular phone, a video phone, a smart pad, a smart watch, a tablet PC, a car navigation system, a computer monitor, a laptop, a head mounted display (HMD) device, and the like.

The processor 1010 may perform various computing functions or various tasks. The processor 1010 may be a micro-processor, a central processing unit (CPU), an application processor (AP), and the like. The processor 1010 may be coupled to other components via an address bus, a control bus, a data bus, etc. Further, the processor 1010 may be coupled to an extended bus such as a peripheral component interconnection (PCI) bus.

The processor 1010 may output the input image data IMG and the input control signal CONT to the driving controller 200 of FIG. 1. In an embodiment, the processor 1010 may output the test image data TIMG to the driving controller 200.

The memory device 1020 may store data for operations of the electronic device 1000. For example, the memory device 1020 may include at least one non-volatile memory device such as an erasable programmable read-only memory (EPROM) device, an electrically erasable programmable read-only memory (EEPROM) device, a flash memory device, a phase change random access memory (PRAM) device, a resistance random access memory (RRAM) device, a nano floating gate memory (NFGM) device, a polymer random access memory (PoRAM) device, a magnetic random access memory (MRAM) device, a ferroelectric random access memory (FRAM) device, and the like and/or at least one volatile memory device such as a dynamic random access memory (DRAM) device, a static random access memory (SRAM) device, a mobile DRAM device, and the like.

The storage device 1030 may include a solid state drive (SSD) device, a hard disk drive (HDD) device, a CD-ROM device, and the like. The I/O device 1040 may include an input device such as a keyboard, a keypad, a mouse device, a touch-pad, a touch-screen, and the like and an output device such as a printer, a speaker, and the like. In some embodiments, the display apparatus 1060 may be included in the I/O device 1040. The power supply 1050 may provide power for operations of the electronic device 1000. The display apparatus 1060 may be coupled to other components via the buses or other communication links.

Referring to FIG. 20, the electronic device of the present invention is shown implemented as a smartphone, but the present invention is not limited thereto. The electronic device may be a television, a monitor, a laptop computer, or a tablet. Additionally, the electronic device may be a car.

The display apparatus according to the embodiments may be applied to a display apparatus included in a computer, a notebook, a mobile phone, a smart phone, a smart pad, a PMP, a PDA, an MP3 player, or the like.

The foregoing is illustrative of the present invention and is not to be construed as limiting thereof. Although a few embodiments of the present invention have been described, those skilled in the art will readily appreciate that many modifications are possible in the embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The present invention is defined by the following claims, with equivalents of the claims to be included therein.

Examples are set out in the following numbered clauses:
1. A display apparatus comprising:
   a display panel including a pixel;
   a data driver configured to apply a data voltage based on a data signal to the pixel; and
   a driving controller configured to receive input image data and output the data signal, wherein the driving controller is configured to convert a luminance of the input image data and a color coordinate of the input image data by using test data based on a test image and output the data signal based on a converted input image data.
2. The display apparatus of clause 1, wherein the test data includes luminance recognition test data and color sense recognition test data,
   wherein the luminance recognition test data has a value based on selected luminance which is selected from the test image, and
   wherein the color sense recognition test data has a value based on selected color which is selected from the test image.
3. The display apparatus of clause 2, wherein when the test image include a first luminance and a second luminance higher than the first luminance and the selected luminance is the second luminance of the first luminance and the second luminance, a first converted luminance of the converted input image data is lower than a luminance of the input image data.
4. The display apparatus of clause 3, wherein when the test image further include a third luminance higher than the second luminance and the selected luminance is the third luminance among the first luminance, the second luminance, and the third luminance, a second converted luminance of the converted input image data is lower than the first converted luminance.
5. The display apparatus of any of clauses 2 to 4, wherein when the selected luminance is a 5 second luminance higher than a first luminance, a range of the data voltage is decreased compared to a case that the selected luminance is the first luminance.
6. The display apparatus of any of clauses 2 to 5, wherein the pixel includes:
   a driving transistor configured to generate a driving current based on a first power voltage and the data voltage; and
   a light emitting element including a first electrode for receiving the driving current and a second electrode for receiving a second power voltage, and
   wherein when the selected luminance is a second luminance higher than a first luminance, the second power voltage is increased compared to a case that the selected luminance is the first luminance.
7. The display apparatus of any of clauses 2 to 6, wherein when the selected color is a first color, a second color coordinate of a second color which is complementary color of the first color is converted by the driving controller.
8. The display apparatus of clause 7, wherein when the selected color is the first color, the second color coordinate after conversion is closer to a first color coordinate of the first color than the second color coordinate before the conversion.
9. The display apparatus of any preceding clause, wherein the driving controller includes:
   a luminance data calculator configured to determine a luminance level based on the test data;
   a luminance compensator configured to determine a converted luminance of the converted input image data based on the luminance level and output offset data including information on the converted luminance; and
   a signal outputter configured to convert the input image data based on the converted luminance and output the data signal.
10. The display apparatus of clause 9, further comprising a gamma reference voltage generator configured to apply a gamma reference voltage to the data driver,
   wherein the signal outputter further outputs a luminance control signal based on the converted luminance, and
   wherein the gamma reference voltage generator changes a range of the gamma reference voltage based on the luminance control signal.
11. The display apparatus of clause 10, wherein when the luminance level is higher, the range of the gamma reference voltage is narrower.
12. The display apparatus of any of clauses 9 to 11, further comprising a voltage generator configured to apply a first power voltage and a second power voltage to the display panel,
   wherein the pixel includes:
   a driving transistor configured to generate a driving current based on the first power voltage and the data voltage; and
   a light emitting element including a first electrode for receiving the driving current and a second electrode for receiving the second power voltage,
   wherein the signal outputter further outputs a luminance control signal based on the converted luminance, and
   wherein the voltage generator changes the second power voltage based on the luminance control signal.
13. The display apparatus of clause 12, wherein when the luminance level is higher, the second power voltage is higher.
14. The display apparatus of any of clauses 9 to 13, wherein the driving controller further includes:
   a color sense data calculator configured to determine a color sense level based on the test data; and
   a color sense compensator configured to determine a converted color coordinate based on the color sense level, and
   wherein the signal outputter converts the input image data based on the converted color coordinate and the converted luminance.
15. The display apparatus of clause 14, wherein a complementary color coordinate corresponding to the color sense level is closer to corresponding color coordinate corresponding to the color sense level by the conversion of the input image data based on the converted color coordinate and the converted luminance.
16. The display apparatus of any of clauses 9 to 15, wherein the driving controller further includes:
   a stress converter configured to determine a deterioration of the display panel and output deterioration data; and
   a compensation signal outputter configured to receive the deterioration data and the offset data and output a compensation signal based on the deterioration data and the offset data, and
   wherein the signal outputter outputs the data signal based on the input image data and the compensation signal.
17. The display apparatus of any preceding clause, wherein the driving controller includes:
   a color sense data calculator configured to determine a color sense level based on the test data;
   a color sense compensator configured to determine a converted color coordinate based on the color sense level; and
   a signal outputter configured to convert the input image data based on the converted color coordinate and output the data signal.
18. The display apparatus of clause 17, wherein a complementary color coordinate corresponding to the color sense level is closer to corresponding color coordinate corresponding to the color sense level by the conversion of the input image data based on the converted color coordinate.
19. The display apparatus of any preceding clause, wherein the test image includes a luminance test image,
   wherein the luminance test image includes a first luminance image and a second luminance image,
   wherein the first luminance image includes a first luminance region,
   wherein the second luminance image includes a second luminance region having a luminance lower than a luminance of the first luminance region.
20. The display apparatus of any preceding clause, wherein the test image includes a color sense test image, and
   wherein the color sense test image includes a first color region having a first color and a second color region having a second color different from the first color.
21. The display apparatus of any preceding clause, wherein the test image includes a luminance test image, and
   wherein the luminance test image includes a first luminance region, a second luminance region having a luminance lower than a luminance of the first luminance region and a third luminance region having a luminance lower than a luminance of the second luminance region.
22. The display apparatus of any preceding clause, wherein the test image includes a first test image, a second test image and a third test image,
   wherein the first test image includes a first color region having a first color and a second color region having a second color different from the first color,
   wherein the second test image includes a first selected luminance region having a selected color which is selected from the first color and the second color, and
   wherein the third test image has the selected color and includes a second selected luminance region having a luminance lower than a luminance of the first selected luminance region.
23. A method of driving a display panel comprising:
   driving for displaying a test image;
   receiving test data based on the test image;
   calculating offset data based on the test data;
   converting input image data to converted input image data based on the offset data; and
   generating a data signal based on the converted input image data.
24. The method of clause 23, wherein the test data includes luminance recognition test data and color sense recognition test data,
   wherein the luminance recognition test data has a value based on selected luminance which is selected from the test image, and
   wherein the color sense recognition test data has a value based on selected color which is selected from the test image.
25. The method of clause 24, wherein when the test image include a first luminance and a second luminance higher than the first luminance and the selected luminance is the second luminance of the first luminance and the second luminance, a first converted luminance of the converted input image data is lower than a luminance of the input image data.
26. The method of clause 24 or clause 25, wherein when the selected color is a first color, a second color coordinate of a second color which is complementary color of the first color is converted.
27. The method of clause 26, wherein when the selected color is the first color, the second color coordinate after conversion is closer to a first color coordinate of the first color than the second color coordinate before the conversion.
28. An electronic device comprising:
   a display panel including a pixel;
   a data driver configured to apply a data voltage based on a data signal to the pixel; and
   a driving controller configured to receive input image data and output the data signal, wherein the driving controller converts a luminance of the input image data and a color coordinate of the input image data by using test data based on a test image and output the data signal based on a converted input image data.

## Claims

1. A display apparatus comprising:
a display panel including a pixel;
a data driver configured to apply a data voltage based on a data signal to the pixel; and
a driving controller configured to receive input image data and output the data signal,
wherein the driving controller is configured to convert a luminance of the input image data and a color coordinate of the input image data by using test data based on a test image and output the data signal based on a converted input image data.

2. The display apparatus of claim 1, wherein the test data includes luminance recognition test data and color sense recognition test data,
wherein the luminance recognition test data has a value based on selected luminance which is selected from the test image, and
wherein the color sense recognition test data has a value based on selected color which is selected from the test image.

3. The display apparatus of claim 2, wherein when the test image includes a first luminance and a second luminance higher than the first luminance and the selected luminance is the second luminance of the first luminance and the second luminance, a first converted luminance of the converted input image data is lower than a luminance of the input image data.

4. The display apparatus of claim 3, wherein when the test image further includes a third luminance higher than the second luminance and the selected luminance is the third luminance among the first luminance, the second luminance, and the third luminance, a second converted luminance of the converted input image data is lower than the first converted luminance.

5. The display apparatus of any of claims 2 to 4, wherein when the selected luminance is a second luminance higher than a first luminance, a range of the data voltage is decreased compared to a case that the selected luminance is the first luminance.

6. The display apparatus of any of claims 2 to 5, wherein the pixel includes:
a driving transistor configured to generate a driving current based on a first power voltage and the data voltage; and
a light emitting element including a first electrode for receiving the driving current and a second electrode for receiving a second power voltage, and
wherein when the selected luminance is a second luminance higher than a first luminance, the second power voltage is increased compared to a case that the selected luminance is the first luminance.

7. The display apparatus of any of claims 2 to 6, wherein when the selected color is a first color, a second color coordinate of a second color which is complementary color of the first color is converted by the driving controller.

8. The display apparatus of claim 7, wherein when the selected color is the first color, the second color coordinate after conversion is closer to a first color coordinate of the first color than the second color coordinate before the conversion.

9. The display apparatus of any preceding claim, wherein the driving controller includes:
a luminance data calculator configured to determine a luminance level based on the test data;
a luminance compensator configured to determine a converted luminance of the converted input image data based on the luminance level and output offset data including information on the converted luminance; and
a signal outputter configured to convert the input image data based on the converted luminance and output the data signal.

10. The display apparatus of claim 9, further comprising a gamma reference voltage generator configured to apply a gamma reference voltage to the data driver,
wherein the signal outputter further outputs a luminance control signal based on the converted luminance, and
wherein the gamma reference voltage generator changes a range of the gamma reference voltage based on the luminance control signal.

11. The display apparatus of claim 10, wherein when the luminance level is higher, the range of the gamma reference voltage is narrower.

12. The display apparatus of any of claims 9 to 11, further comprising a voltage generator configured to apply a first power voltage and a second power voltage to the display panel,
wherein the pixel includes:
a driving transistor configured to generate a driving current based on the first power voltage and the data voltage; and
a light emitting element including a first electrode for receiving the driving current and a second electrode for receiving the second power voltage,
wherein the signal outputter further outputs a luminance control signal based on the converted luminance, and
wherein the voltage generator changes the second power voltage based on the luminance control signal.

13. The display apparatus of claim 12, wherein when the luminance level is higher, the second power voltage is higher.

14. The display apparatus of any of claims 9 to 13, wherein the driving controller further includes:
a color sense data calculator configured to determine a color sense level based on the test data; and
a color sense compensator configured to determine a converted color coordinate based on the color sense level, and
wherein the signal outputter converts the input image data based on the converted color coordinate and the converted luminance.

15. The display apparatus of claim 14, wherein a complementary color coordinate corresponding to the color sense level is closer to corresponding color coordinate corresponding to the color sense level by the conversion of the input image data based on the converted color coordinate and the converted luminance.
